(19) Europäisches Patentamt
European Patent Office
Office européen des brevets

(11) **EP 3 148 013 A1**

(12) **EUROPÄISCHE PATENTANMELDUNG**

(43) Veröffentlichungstag:
**29.03.2017 Patentblatt 2017/13**

(51) Int Cl.:
**H01R 25/14** (2006.01)   **H01R 41/00** (2006.01)
**H01R 103/00** (2006.01)

(21) Anmeldenummer: **15186520.1**

(22) Anmeldetag: **23.09.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Siemens Aktiengesellschaft**
**80333 München (DE)**

(72) Erfinder: **LINZMAIER, Klaus-Peter**
**73650 Winterbach (DE)**

(54) **SCHLEIFLEITER UND SCHLEIFKONTAKT**

(57)     Die Erfindung betrifft einen Schleifleiter (100), insbesondere Schleifleiter zur Strom- und/oder Datenübertragung. Um einen Schleifleiter (100) anzugeben, der die Datenübertragung über herkömmliche Schleifleiter verbessert und dabei die Leiterdichte erhöht wird ein Schleifleiter (100) vorgeschlagen, der ein elektrisch isolierendes Profil (101), ein erstes elektrisch leitendes Profil (110) und ein zweites elektrisch leitendes Profil (120) aufweist, wobei das erste und das zweite elektrisch leitende Profil (110, 120) derart im elektrisch isolierenden Profil (101) angeordnet sind, dass sie elektrisch voneinander isoliert sind. Weiterhin liegt der Erfindung die Aufgabe zugrunde, einen Schleifkontakt (200) zur Verwendung mit dem Schleifleiter (100) anzugeben.

FIG 3

EP 3 148 013 A1

**Beschreibung**

Die Erfindung betrifft einen Schleifleiter, insbesondere einen Schleifleiter zur Strom- und/oder Datenübertragung. Die Erfindung betrifft weiter einen Schleifkontakt zur Verwendung mit einem Schleifleiter.

Derartige Schleifleiter und Schleifkontakte werden vor allem zur Datenübertragung zwischen einem ortsfesten Teil eines Netzwerks und einem beweglichen Netzwerkteilnehmer verwendet und kommen beispielsweise in Schleifleiternetzwerken einer industriellen Hängebahn oder auch Elektrohängebahn-Anlagen (EHB-Anlagen) zum Einsatz. Dort können Steuersignale einer zentralen Steuerung an die beweglichen Netzwerkteilnehmer über die Schleifleiter und die Schleifkontakte übertragen werden. Weitere Anwendungen existieren beispielsweise bei Regalbediengeräten, Flurförderzeugen, Krananlagen, Aufzügen und Hebezeugen, Verschiebewägen und Fahrgeschäften. Elektrohängebahnen bestehen aus einer stationären Anlagensteuerung und Energieversorgung, dem Schienensystem und den mobilen Fahrzeugen. Die mobilen Fahrzeuge sind entweder über Kontaktanordnungen oder Abnehmer, insbesondere Schleifkontakte, mit ortsfesten Stromschienen, Schleifleitern verbunden.

Der Erfindung liegt die Aufgabe zugrunde, einen Schleifleiter anzugeben, der die Datenübertragung über herkömmliche Schleifleiter verbessert und dabei die Leiterdichte erhöht. Weiterhin liegt der Erfindung die Aufgabe zugrunde, einen Schleifkontakt zur Verwendung mit dem Schleifleiter anzugeben.

Diese Aufgabe wird durch einen Schleifleiter mit den im Anspruch 1 angegebenen Merkmalen gelöst.

Dazu wird ein Schleifleiter vorgeschlagen, insbesondere ein Schleifleiter zur Strom- und Datenübertragung, der ein elektrisch isolierendes Profil, ein erstes elektrisch leitendes Profil und ein zweites elektrisch leitendes Profil aufweist. Das erste und das zweite elektrisch leitende Profil sind dabei derart im elektrisch isolierenden Profil angeordnet, dass sie elektrisch voneinander isoliert sind.

Sollen über den Schleifleiter vor allem Daten übertragen werden und/oder nur geringe Leistungen, so ist es möglich, vorhandene Profile in zwei elektrisch leitende Profile aufzuteilen. Auf diese Art und Weise erhält man einen Schleifleiter, der bei Beibehaltung vorhandener Formfaktoren zwei Leiter aufweist und damit zur Datenübertragung auf geringerem Raum verwendet werden kann. Ebenso denkbar ist, dass die Bandbreite, die über einen erfindungsgemäßen Schleifleiter übertragen werden kann, durch Verwendung von zwei erfindungsgemäßen Schleifleitern entsprechend erhöht wird. Damit ist auch denkbar, dass gegenüber Systemen, die bisher Schleifleiter mit lediglich einem einzelnen elektrisch leitenden Profil aufweisen, die Bandbreite bei gleichbleibendem Raumbedarf erhöht werden kann. Damit eignet sich die erfindungsgemäße Lösung zur Nachrüstung von bestehenden Systemen. Die kleinere Packungsdichte ist möglich, da zur Datenübertragung deutlich kleinere Spannungen und Ströme nötig sind, als im Vergleich zu den leistungsführenden Leitern, die beispielsweise die Leistung für den Antrieb von Elektro-Hängebahnen bereitstellen.

Das erste und das zweite elektrisch leitende Profil kann dabei, je nach Anwendung, aus Kupfer oder dessen Legierungen bestehen. Hierbei sind Materialeigenschaften von Vorteil, die einer niedrigen Gleitreibung zwischen einem Schleifkontakt und dem Schleifleiter begünstigen. Des Weiteren ist es vorteilhaft, wenn das elektrisch leitende Profil einen niedrigen Abrieb aufweist. Das elektrisch isolierende Profil kann dabei aus verschiedenen isolierenden Kunststoffen bestehen, die ebenfalls je nach Anwendungsgebiet optimiert sein können. Auch weitere elektrische Isolatoren sind denkbar.

In einer weiteren vorteilhaften Ausführungsform eines Schleifleiters, weist der Schleifleiter eine elektrisch isolierende Ausbuchtung auf, wobei die elektrisch isolierende Ausbuchtung zumindest zur teilweisen elektrischen Isolierung des ersten elektrisch leitenden Profils vom zweiten elektrisch leitenden Profil ausgebildet ist. Die elektrisch isolierende Ausbuchtung kann dabei aus demselben Material beschaffen sein, wie das isolierende Profil. Es ist aber ebenso denkbar, dass zur Optimierung des Kapazitätsbelags zwischen den beiden elektrisch leitenden Profilen ein entsprechendes Material gewählt wird. Das Material der isolierenden Ausbuchtung kann dabei verschieden von dem Material isolierenden Profils sein. Die elektrisch isolierende Ausbuchtung kann dabei vorteilhafterweise weiterhin eine mechanische Führungsfunktion für die Schleifkontakte aufweisen.

In einer weiteren vorteilhaften Ausführungsform eines Schleifleiters weisen das erste elektrisch leitende Profil eine erste Flächenerweiterung und/oder das zweite elektrisch leitende Profil eine zweite Flächenerweiterung auf. Prinzipiell gilt für die Impedanz $Z_l$ eines Leiters mit dem kapazitiven Leitungsbelag C' und dem induktiven Leitungsbelag L' eines Leiters bei hohen und sehr hohen Frequenzen folgender Zusammenhang:

$$Z_l = \sqrt{\frac{L'}{C'}}$$

Die auch als Wellenwiderstand bezeichnete Leitungsimpedanz wird also umso geringer, je größer der Kapazitätsbelag wird. Für die Kapazität C zwischen zwei Platten mit der Fläche A im Abstand d gilt mit der elektrischen Feldkonstante $\varepsilon_0$ und der relativen Permittivität $\varepsilon_R$:

$$C = \varepsilon_R \varepsilon_0 \frac{A}{d}$$

Um also einen Schleifleiter mit geringem Wellenwiderstand zu erhalten, kann die relevante Fläche der elektrisch leitenden Profilen vergrößert werden, da die elektrischen Profile dann auf breiterer Fläche parallel laufen. Geringe Wellenwiderstände bzw. Leitungsimpedanzen sind von Vorteil, da durch die Belastung der Leitung durch den Eingangswiderstand der beweglichen Netzwerkteilnehmer oder deren Anschlussleitungen ein Spannungsteiler ausgebildet wird und ein Datensignal entlang der Leitung durch die Teilnehmer eine hohe Dämpfung erfährt. Dadurch wird die Signalqualität auf der gesamten Leitungslänge verbessert.

In einer weiteren Ausführungsform eines Schleifleiters sind die elektrisch leitenden Profile auf einen Strom bis maximal 10 A, insbesondere auf einen Strom bis maximal 5 A, ausgelegt. Da der Schleifleiter in erster Linie zur Übertragung von Daten vorgesehen ist, ist eine Auslegung auf einen Strom bis max. 10A bzw. 5A vorteilhaft. Dadurch lässt sich nicht nur Material sparen, sondern das Gesamtgewicht der Schleifleiter sinkt ebenfalls.

In einer weiteren Ausführungsform eines Schleifleiters ist das elektrisch isolierende Profil zur Isolation von Wechselspannungen bis maximal 100 V, insbesondere zur Isolation von Spannungen bis maximal 50 V, ausgelegt. Dies ist besonders deshalb vorteilhaft, da bei Schleifleitern, die vornehmlich zur Leistungsübertragung ausgebildet sind, Spannungen bis hin zu 600 V üblich sind. Werden die Spannungen nun entsprechend reduziert, kann das isolierende Profil für entsprechend niedrigere Spannungen von max. 100V insbesondere von Spannungen von max. 50V ausgelegt und auf die Datenübertragung optimiert werden. Dadurch kann der Isolator dünner ausgeführt werden. Durch die dadurch möglichen kleineren Abstände zwischen den elektrisch leitenden Profilen kann die Packungsdichte weiter erhöht und der Wellenwiderstand weiterhin vorteilhaft verringert werden. Die Verringerung des Wellenwiderstandes ergibt sich nach den eingangs genannten Zusammenhängen aus der Erhöhung der Kapazität.

In einer weiteren Ausführungsform eines Schleifleiters sind das erste und das zweite elektrisch leitende Profil symmetrisch im elektrisch isolierenden Profil angeordnet. Eine symmetrische Anordnung der elektrisch leitenden Profile vereinfacht nicht nur die Montage des gesamten Schleifleiters, sondern erhöht die mechanische Stabilität und vereinfacht die Konstruktion eines derartigen Schleifleiters erheblich.

In einer weiteren Ausführungsform eines Schleifleiters weist das elektrisch isolierende Profil eine erste Nut und eine zweite Nut auf, wobei die erste Nut zur zumindest teilweisen Aufnahme des ersten elektrisch leitenden Profils und die zweite Nut zur zumindest teilweisen Aufnahme des zweiten elektrisch leitenden Profils ausgebildet ist. Dies ist insbesondere deshalb von Vorteil, da das elektrisch isolierende Profil so eine zweite Funktion zur mechanischen Stabilisierung der elektrisch leitenden Profile aufweist.

In einer weiteren Ausführungsform eines Schleifleiters ist das erste elektrisch leitende Profil mittels der ersten Nut und der elektrisch isolierenden Ausbuchtung fixiert und das zweite elektrisch leitende Profil mittels der zweiten Nut und der elektrisch isolierenden Ausbuchtung fixiert. Eine derartige Fixierung der elektrisch leitenden Profile im elektrisch isolierenden Profil ist hinsichtlich einer automatisierbaren Handhabbarkeit und Produktion der Schleifleiter besonders von Vorteil.

In einer weiteren Ausführungsform eines Schleifleiters ist das elektrisch isolierende Profil zumindest teilweise als ein Schaumstoff mit hohem Gasanteil, insbesondere mit hohem unpolarem Gasanteil, ausgebildet. Wird anstatt einer reinen Feststoffisolierung ein Schaumstoff mit hohem Gasanteil verwendet, so kann dies die elektrische Dämpfung reduzieren. Im umpolaren Gas im Schaumstoff treten deutlich geringere Umpolungsverluste durch Wechselfelder auf. Dies verbessert die Verwendbarkeit der Schleifleiter als Datenleiter deutlich. Im einfachsten Fall handelt es sich bei dem Gas um Luft.

In einer weiteren Ausführungsform eines Schleifleiters ist die elektrisch isolierende Ausbuchtung zumindest teilweise als ein Schaumstoff mit hohem Gasanteil, insbesondere mit hohem unpolarem Gasanteil, ausgebildet. Wird die elektrisch isolierende Ausbuchtung als Schaumstoff ausgeführt und ist diese zumindest teilweise zwischen den beiden elektrisch leitenden Profilen ausbildet, so reduzieren sich die Verluste durch die dielektrische Dämpfung weiter und die Dämpfung durch Umpolungsverluste verringert sich ebenfalls.

Die Aufgabe wird weiterhin durch einen Schleifkontakt zur Verwendung mit einem erfindungsgemäßen Schleifleiter gelöst, wobei der Schleifkontakt einen ersten Schleifer und einen zweiten Schleifer aufweist, die derart angeordnet sind, das sie elektrisch voneinander isoliert sind. Ein derartiger Schleifkontakt ist somit optimal für die Anwendung mit einem erfindungsgemäßen Schleifleiter ausgebildet. Die Brauchbarkeitsdauer der Schleifkontakte wird dabei wesentlich dadurch bestimmt, wie weit der Schleifer abgenutzt werden kann, bevor kein Kontakt zwischen Schleifer und Schleifleitung mehr möglich ist. Die Schleifer können dabei beispielsweise Kupfer-Graphit-Sintermaterialien sein.

In einer besonders vorteilhaften Ausführungsform eines Schleifkontakts weist dieser einen Isolator auf, der zumindest zur teilweisen elektrischen Isolierung des ersten Schleifers vom zweiten Schleifer ausgebildet ist. Hierbei ist unter Umständen zu beachten, dass der Isolator entsprechend dimensioniert ist, dass der Schleifkontakt auch bis zum Ende seiner Lebensdauer nicht mechanische mit dem Isolator an der Schiene schleift.

Beispielsweise kann dazu der Schleifer länger ausgeführt sein als der Isolator. Auch um die mechanische Stabilität des Schleifkontakts weiter zu erhöhen, kann dieser elektrische Isolator zwischen den Schleifern angeordnet werden. Weiterhin kann die Packungsdichte noch dadurch erhöht werden, dass der Isolator durch seine isolierende Wirkung einen geringeren Abstand zwischen den beiden Schleifern ermöglicht.

Im Folgenden wird die Erfindung anhand der in den Figuren dargestellten Ausführungsbeispiele näher beschrieben und erläutert. Es zeigen:

FIG 1      einen Schleifleiter mit einem einzelnen elektrisch leitenden Profil,

FIG 2      den Schleifleiter aus FIG 1 mit einem Schleifkontakt

FIG 3      einen Schleifleiter mit zwei elektrisch leitenden Profilen,

FIG 4      den Schleifleiter aus FIG 3 mit einem doppelten Schleifkontakt

FIG 5      einen Schleifleiter mit zwei elektrisch leitenden Profilen und Flächenerweiterungen und

FIG 6      den Schleifleiter aus FIG5 mit einem Schleifkontakt.

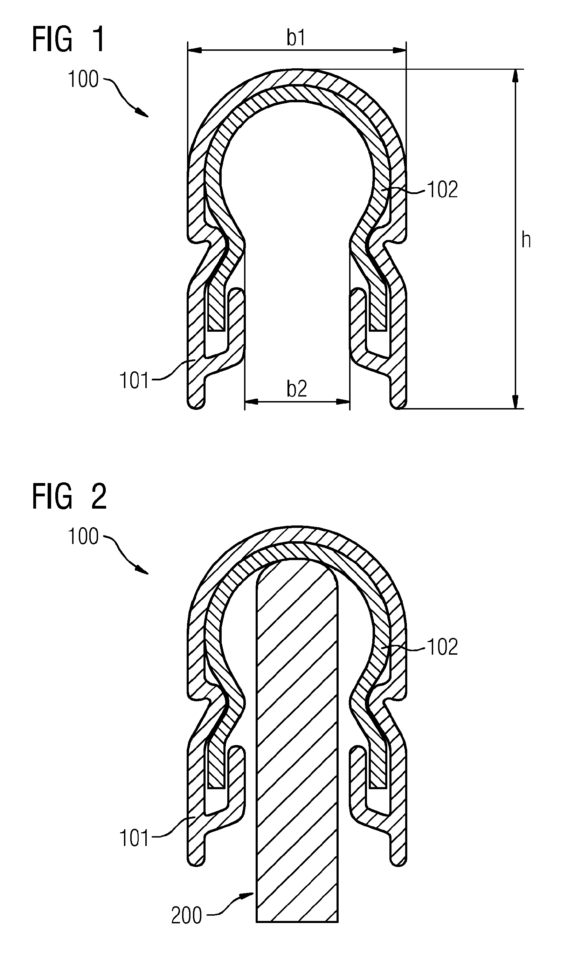

FIG 1 zeigt einen herkömmlichen Schleifleiter 100, der ein isolierendes Profil 101 und ein einzelnes leitendes Profil 102 aufweist. Der Schleifleiter 100 weist dabei eine Höhe h, eine äußere Breite b1 sowie eine Öffnungsweite b2 auf. Das isolierende Profil 101 umschließt dabei das elektrisch leitende Profil 102 und beide Profile weisen zusammen die Öffnungsweite b2 auf. Eine typische Höhe h eines solchen Schleifleiters 100 wären dabei 17,5 mm, eine typische Breite b1 wären 11,2 mm und eine typische Öffnungsweite b2 wären dabei 5,5 mm.

FIG 2 zeigt den herkömmlichen Schleifleiter aus FIG 1 mit einem Schleifkontakt 200, der durch die Öffnungsweite b2 in den Hohlraum im Schleifleiter 100 hineinragt.

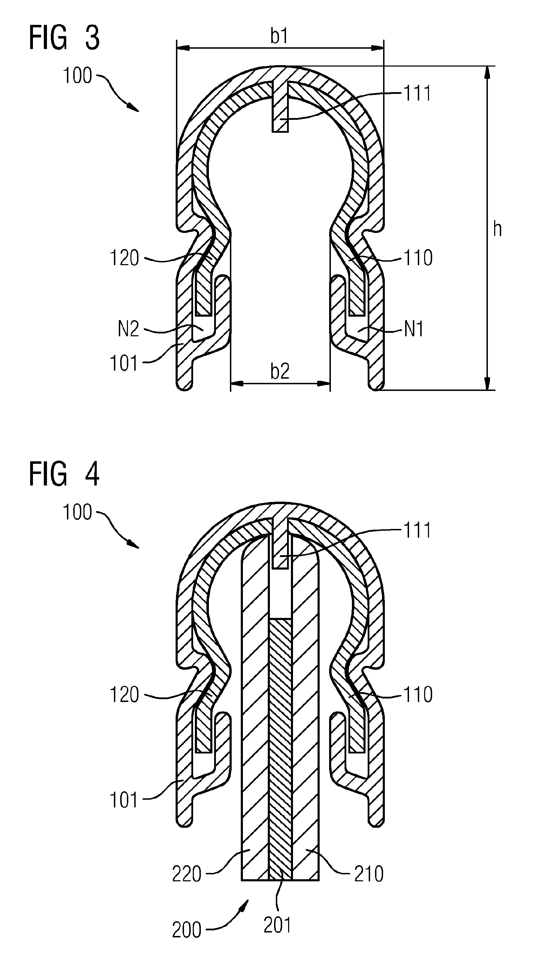

FIG 3 zeigt eine mögliche Ausführungsform eines Schleifleiters 100, der ein elektrisch isolierendes Profil 101, ein erstes elektrisch leitendes Profil 110 und ein zweites elektrisch leitendes Profil 120 aufweist. Das elektrisch isolierende Profil 101 kann dabei aus einem Kunststoff gefertigt sein, das erste und das zweite leitende Profil 110, 120 kann dabei jeweils als Kupferschiene ausgeführt sein. Es ist ebenso denkbar, dass aufgrund der niedrigen zu erwartenden elektrischen Spannungen, das isolierende Profil 101 auf die elektrisch leitenden Profile aufextrudiert oder in einem anderen Verfahren aufgebracht wird. Das elektrisch isolierende Profil 101 kann aufgrund seiner Geometrie alternativ und einfach mit Extrusionsverfahren gefertigt werden.

Der Schleifleiter 100 weist weiterhin eine Höhe h, eine Breite b1 und eine Öffnungsweite b2 auf. Durch die Öffnungsweite b2 ist es möglich, einen Schleifkontakt in den Hohlraum des Schleifleiters 100 einzubringen. Das elektrisch isolierende Profil 101 weist außerdem eine elektrisch isolierende Ausbuchtung 111 auf. Die elektrisch isolierende Ausbuchtung ragt dabei über die Enden der elektrisch leitenden Profile 110, 120 hinaus und fixiert diese jeweils mit einer ersten Nut N1 und einer zweiten Nut N2 im elektrisch isolierenden Profil 101. Auf diese Art und Weise sind im selben Bauraum, wie bei dem aus FIG 1 bekannten Schleifleiter, zwei elektrisch leitende Profile 110, 120 untergebracht. Die Breite b1 kann dabei beispielsweise weiterhin 11,2 mm betragen und die Höhe h kann ebenfalls weiterhin 17,5 mm betragen. Die Öffnungsweite b2 kann ebenfalls weiterhin 5,5 mm betragen. Das deutlich nähere Zusammenrücken von zwei elektrisch leitenden Profilen 110, 120 führt wiederum zu einem deutlich geringeren Wellenwiderstand, da der Kapazitätsbelag hier größer wird. Dies wurde bereits eingangs mit Formeln erläutert. Deutlich näher ergibt sich im Vergleich zu dem herkömmlichen Schleifleiter aus FIG 1, da hier zweimal die Breite b1 nötig wäre um zwei derartige Schienen nebeneinander anzuordnen, was wiederum einen deutlich höheren Wellenwiderstand zur Folge hätte.

FIG 4 zeigt unter Beibehaltung der Bezugszeichen aus FIG 3 einen Schleifleiter 100, der mit einem Schleifkontakt 200 dargestellt ist. Der Schleifkontakt 200 weist wiederum einen ersten Schleifer 210 und einen zweiten Schleifer 220 auf. In dieser Ausführungsform sind der erste Schleifer 210 und der zweite Schleifer 220 von einem Isolator 201 separiert. Der Isolator 201 dient dabei nicht nur zur elektrischen Isolierung, sondern kann der ganzen Schleifkontaktanordnung 200 auch mechanische Stabilität oder gar den kompletten Zusammenhalt verleihen. Der Freiraum, der sich zwischen dem Isolator 201 und der elektrisch isolierenden Ausbuchtung 111 bildet, ist der Abnutzung des Schleifkontakts 200 bzw. dessen ersten und zweiten Schleifer 210, 220 geschuldet. Der erste und der zweite Schleifer 210, 220 können dabei beispielsweise aus Kupfer-Graphit-Sintermaterialien bestehen. Es sind aber ebenso weitere Materialien denkbar.

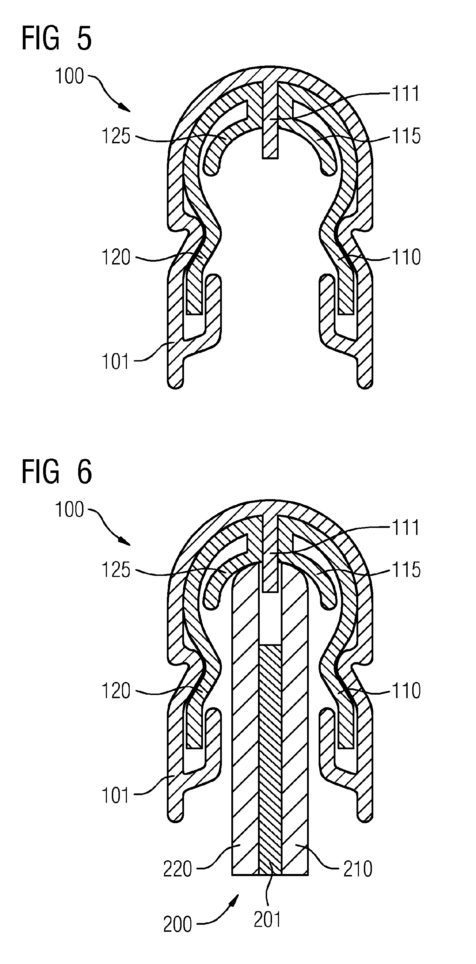

FIG 5 zeigt eine besonders vorteilhafte Ausführungsform eines Schleifleiters 100, der unter Beibehaltung der Bezugszeichen aus FIG 3 und 4 dargestellt ist. Die vorteilhafte Weiterbildung gegenüber dem Schleifleiter 100 aus FIG 3 besteht hier darin, dass das erste und das zweite elektrisch leitende Profil 110, 120 jeweils eine erste und eine zweite Flächenerweiterung 115, 125 aufweisen. In diesem Fall sind die Flächenerweiterungen 115, 125 jeweils eine Hinterschneidung der elektrisch leitenden Profile 110, 120, die sich jeweils von einer Seite an die elektrisch isolierende Ausbuchtung 111 anlehnt. Diese Hinterschneidung vergrößert den für den Wellenwiderstand relevanten Kapazitätsbelag, der zwischen den beiden elektrisch leitenden Profilen 110, 120 auftritt, erheblich durch die Vergrößerung der für den Kapazitätsbelag relevanten Fläche. Wie eingangs erläutert, führt ein höherer Kapazitätsbelag zu einer niedrigeren Impedanz und damit zu einem niedrigeren Wellenwiderstand.

FIG 6 zeigt unter Beibehaltung der Bezugszeichen aus FIG 5 einen um Flächenerweiterungen 115, 125 erweiterten Schleifleiter 100, der mit einem Schleifkontakt 200 dargestellt ist. Auch hier weist der Schleifkontakt 200 wiederum einen ersten Schleifer 210 und einen zweiten Schleifer 220 auf und ist damit in der Lage, beide elektrisch leitenden Profile 110, 120 zu kontaktieren. Der Isolator 201 ist zwischen dem ersten Schleifer 210 und dem zweiten Schleifer 220 angeordnet und isoliert die beiden voneinander elektrisch. Der Übersichtlichkeit halber nicht mehr dargestellt ist die Höhe h, die Breite b1 und die Öffnungsweite b2, die sich aber im Vergleich zu FIG 3 und 4 nicht verändern muss sondern gleich bleiben kann.

Zusammenfassend betrifft die Erfindung einen Schleifleiter 100, insbesondere Schleifleiter zur Strom- und/oder Datenübertragung. Um einen Schleifleiter 100 anzugeben, der die Datenübertragung über herkömmliche Schleifleiter verbessert und dabei die Leiterdichte erhöht wird ein Schleifleiter 100 vorgeschlagen, der ein elektrisch isolierendes Profil 101, ein erstes elektrisch leitendes Profil 110 und ein zweites elektrisch leitendes Profil 120 aufweist, wobei das erste und das zweite elektrisch leitende Profil 110, 120 derart im elektrisch isolierenden Profil 101 angeordnet sind, dass sie elektrisch voneinander isoliert sind. Weiterhin liegt der Erfindung die Aufgabe zugrunde, einen Schleifkontakt 200 zur Verwendung mit dem Schleifleiter 100 anzugeben.

## Patentansprüche

1. Schleifleiter (100), insbesondere Schleifleiter zur Strom- und/oder Datenübertragung, aufweisend:

   • ein elektrisch isolierendes Profil (101),
   • ein erstes elektrisch leitendes Profil (110) und
   • ein zweites elektrisch leitendes Profil (120),

   wobei das erste und das zweite elektrisch leitende Profil (110, 120) derart im elektrisch isolierenden Profil (101) angeordnet sind, dass sie elektrisch voneinander isoliert sind.

2. Schleifleiter (100) nach Anspruch 1, aufweisend eine elektrisch isolierende Ausbuchtung (111), wobei die elektrisch isolierende Ausbuchtung (111) zumindest zur teilweisen elektrischen Isolierung des ersten elektrisch leitenden Profils (110) vom zweiten elektrisch leitenden Profil (120) ausgebildet ist.

3. Schleifleiter (100) nach Anspruch 1 oder 2, wobei das erste elektrisch leitende Profil (110) eine erste Flächenerweiterung (115) und/oder das zweite elektrisch leitende Profil (120) eine zweite Flächenerweiterung (125) aufweist.

4. Schleifleiter (100) nach einem der vorhergehenden Ansprüche, wobei die elektrisch leitenden Profile (110, 120) auf einen Strom bis maximal 10 A, insbesondere auf einen Strom bis maximal 5 A, ausgelegt sind.

5. Schleifleiter (100) nach einem der vorhergehenden Ansprüche, wobei das elektrisch isolierende Profil (101) zur Isolation von Wechselspannungen bis maximal 100 V, insbesondere zur Isolation von Spannungen bis maximal 50 V, ausgelegt ist.

6. Schleifleiter (100) nach einem der vorhergehenden Ansprüche, wobei das erste und das zweite elektrisch leitende Profil (110, 120) symmetrisch im elektrisch isolierenden Profil (101) angeordnet sind.

7. Schleifleiter (100) nach einem der vorhergehenden Ansprüche, wobei das elektrisch isolierende Profil (101) eine erste Nut (N1) und eine zweite Nut (N2) aufweist, wobei die erste Nut (N1) zur zumindest teilweisen Aufnahme des ersten elektrisch leitenden Profils (110) und die zweite Nut (N2) zur zumindest teilweisen Aufnahme des zweiten elektrisch leitenden Profils (120) ausgebildet ist.

8. Schleifleiter (100) nach Anspruch 7, wobei das erste elektrisch leitende Profil (110) mittels der ersten Nut (N1) und der elektrisch isolierenden Ausbuchtung (111) fixiert ist und wobei das zweite elektrisch leitende Profil (120) mittels der zweiten Nut (N2) und der elektrisch isolierenden Ausbuchtung (111) fixiert ist.

9. Schleifleiter (100) nach einem der vorhergehenden Ansprüche, wobei das elektrisch isolierende Profil (101) zumindest teilweise als ein Schaumstoff mit hohem Gasanteil, insbesondere mit hohem unpolarem Gasanteil, ausgebildet ist.

10. Schleifleiter (100) nach einem der vorhergehenden Ansprüche, wobei die elektrisch isolierende Ausbuchtung (111) zumindest teilweise als ein Schaumstoff mit hohem Gasanteil, insbesondere mit hohem unpolarem Gasanteil, ausgebildet ist.

11. Schleifkontakt (200) zur Verwendung mit einem Schleifleiter gemäß einem der Ansprüche 1 bis 10, aufweisend einen ersten Schleifer (210) und einen zweiten Schleifer (220), die derart angeordnet sind, das sie elektrisch voneinander isoliert sind.

12. Schleifkontakt (200) nach Anspruch 11, aufweisend einen Isolator (201), der zumindest zur teilweisen elektrischen Isolierung des ersten Schleifers (210) vom zweiten Schleifer (220) ausgebildet ist.

FIG 1

FIG 2

FIG 3

FIG 4

FIG 5

100

125

120

101

111

115

110

FIG 6

100

125

120

101

111

115

110

220

201

210

200

Europäisches
Patentamt

European
Patent Office

Office européen
des brevets

# EUROPÄISCHER RECHERCHENBERICHT

Nummer der Anmeldung

EP 15 18 6520

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2008/132593 A2 (LESSCORD APS [DK]; STEENSEN OLE [DK]) 6. November 2008 (2008-11-06) * Abbildungen 11a-11c * ----- | 1,4,5,11 | INV. H01R25/14 H01R41/00 |
| X | DE 33 00 202 A1 (RUHRKOHLE AG [DE]) 5. Juli 1984 (1984-07-05) | 1,4-6 | ADD. H01R103/00 |
| A | * Abbildung 2 * ----- | 12 | |
| X | DE 27 30 929 A1 (REHAU PLASTIKS & CO AG) 11. Januar 1979 (1979-01-11) | 1-11 | |
| A | * Abbildungen 1-3 * ----- | 12 | |
| A | US 2013/237072 A1 (KESWANI SUSHIL N [US]) 12. September 2013 (2013-09-12) * Abbildungen 2-6 * ----- | 1-12 | |

RECHERCHIERTE
SACHGEBIETE (IPC)

H01R
H02G
B60M

Der vorliegende Recherchenbericht wurde für alle Patentansprüche erstellt

| Recherchenort | Abschlußdatum der Recherche | Prüfer |
|---|---|---|
| Den Haag | 23. November 2015 | Ferreira, João |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 18 6520

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-11-2015

| Im Recherchenbericht angeführtes Patentdokument | Datum der Veröffentlichung | Mitglied(er) der Patentfamilie | Datum der Veröffentlichung |
|---|---|---|---|
| WO 2008132593 A2 | 06-11-2008 | EP 2151023 A2<br>WO 2008132593 A2 | 10-02-2010<br>06-11-2008 |
| DE 3300202 A1 | 05-07-1984 | KEINE | |
| DE 2730929 A1 | 11-01-1979 | DE 2730929 A1<br>FR 2397083 A1<br>NL 7801412 A | 11-01-1979<br>02-02-1979<br>10-01-1979 |
| US 2013237072 A1 | 12-09-2013 | CA 2866519 A1<br>CN 104205523 A<br>EP 2823537 A1<br>US 2013237072 A1<br>WO 2013134659 A1 | 12-09-2013<br>10-12-2014<br>14-01-2015<br>12-09-2013<br>12-09-2013 |

EPO FORM P0461

Für nähere Einzelheiten zu diesem Anhang : siehe Amtsblatt des Europäischen Patentamts, Nr.12/82